Europäisches Patentamt

(19) European Patent Office

Office européen des brevets

(11) **EP 1 044 125 B1**

(12) **EUROPÄISCHE PATENTSCHRIFT**

(45) Veröffentlichungstag und Bekanntmachung des Hinweises auf die Patenterteilung:
**13.11.2002  Patentblatt 2002/46**

(21) Anmeldenummer: **99940112.8**

(22) Anmeldetag: **02.08.1999**

(51) Int Cl.$^7$: **B60T 13/66**, B60T 15/18

(86) Internationale Anmeldenummer:
**PCT/EP99/05564**

(87) Internationale Veröffentlichungsnummer:
**WO 00/007861 (17.02.2000 Gazette 2000/07)**

(54) **RELAISVENTIL FÜR DRUCKLUFTBREMSSYSTEME VON SCHIENENFAHRZEUGEN**

RELAY VALVE FOR AIRBRAKE SYSTEMS IN RAILWAY VEHICLES

VALVE RELAIS POUR SYSTEMES DE FREINAGE A AIR COMPRIME DE VEHICULE SUR RAILS

(84) Benannte Vertragsstaaten:
**AT BE CH CY DE DK ES FI FR GB GR IE IT LI LU MC NL PT SE**

(30) Priorität: **06.08.1998  DE 19835635**

(43) Veröffentlichungstag der Anmeldung:
**18.10.2000  Patentblatt 2000/42**

(73) Patentinhaber: **KNORR-BREMSE Systeme für Schienenfahrzeuge GmbH 80809 München (DE)**

(72) Erfinder:
• HELLER, Martin
  **D-85716 Unterschleissheim (DE)**
• SONNTAG, Stefan
  **D-82024 Taufkirchen (DE)**

(56) Entgegenhaltungen:
DE-A- 2 355 541          US-A- 3 799 623
US-A- 3 944 287          US-A- 4 163 587

**Beschreibung**

Die Erfindung betrifft ein Relaisventil für Druckluftbremssysteme von Schienenfahrzeugen mit einem Einlaßventil für den Einlaß von Druckluft aus einem Reservoir in einen Wirkungsraum und einem Auslaßventil für den Auslaß von Druckluft aus dem Wirkungsraum in die Umgebung und einem Kolbensystem, das mit dem Ein- und dem Auslaßventil so verbunden ist, daß es bei einer Bewegung in eine erste Richtung das Einlaßventil und bei Bewegung in die entgegengesetzte Richtung das Auslaßventil öffnet.

Relaisventile sind Mengenverstärker. Ein Ein- und ein Ausgangsdruck können dabei sowohl gleich groß, als auch proportional oder auf sonstige Weise verschieden sein, wobei bestimmte Ausführungen auch mehrere umschaltbare Verhältnisse verwirklichen können. Sie werden auch als Druckumsetzer bzw. Druckübersetzer bezeichnet.

Die Druckübersetzer können mit Steuerventilen, die den Steuerdruck erzeugen, zu einem Steuerapparat vereinigt sein, wie beispielsweise in der EP-B-0 496 058 offenbart.

Betreffend Relaisventile, Druckübersetzer sowie deren Verwendung und Einbau in Druckluftbremssystemen von Schienenfahrzeugen wird auf "Bremsen für Schienenfahrzeuge, Handbuch - Bremstechnische Begriffe und Werte, Knorr-Bremse AG, München, 1990" verwiesen.

Druckübersetzer als spezielle Ausbildung eines Relaisventiles sind beispielsweise der Druckübersetzer DÜ24b sowie DÜ24f der KNORR-BREMSE AG, Mooacher-Str. 80, D-80809 München sowie die Druckübersetzer DUK 1.., DUK 3.., DUK 4.. der OERLIKON-KNORR EISENBAHNTECHNIK AG.

Die Druckübersetzer DÜ24 weisen drei Kolben auf, von denen zwei durch eine pneumatische Schaltung vom Ein- und Auslaßventil abgekoppelt werden können. In Betriebszuständen, wo diese Kolben nicht abgekoppelt sind, tritt einer der Kolben auch nur dann in Verbindung mit dem Ein- und dem Auslaßventil, wenn einer von zwei abgeteilten Zylinderräumen mit dem Steuerdruck verbunden ist.

Diese Anordnung ist mit dem Nachteil verbunden, daß das Kolbensystem eine geteilte Kolbenstange mit einer mehrfachen Lagerung und Abdichtung enthält, wodurch eine aufwendige Herstellung erforderlich ist und eine große Hysterese bei der Druckregelung entsteht. Weiterhin ist die Anordnung mit dem Nachteil verbunden, daß die in den Wirkungsraum einsteuerbaren Drücke, soweit sie vom Vorsteuerdruck verschieden sind, durch Variation der Kolbengrößen nicht beliebig gewählt werden können. Schließlich haben diese Relaisventile den Nachteil, daß sie im Moment der Verbindung des Kolbens mit dem Steuerdruck eine Rückwirkung auf diesen ausüben, wodurch eine zusätzliche Regelungenauigkeit entsteht. Solche Rückwirkungen entstehen immer dann, wenn es durch einen Umschaltvorgang, mit dem Ziel der Umstellung der Charakteristik des Gerätes, zu einer Änderung des dem Steuerdrukkes zugeordneten Volumens und damit zu einer Expansion kommt. Die Relaisventile DUK weisen zwar eine gemeinsame Kolbenstange auf, besitzen jedoch den Nachteil, daß aufgrund der Anordnung der Kolben und der zu ihnen führenden Druckluftverbindungen sich mit realisierbaren Kolbengrößen nicht beliebige Drücke einstellen lassen und das sich insgesamt ein aufwendiger Aufbau dadurch ergibt, daß diese Geräte zusätzliche Funktionen ermöglichen.

Das Dokument US-A-4 163 587 zeigt ein Relaisventil für Druckluftbremsen, das durch seinen speziellen Kolbenaufbau und eine Vielzahl von Zusatzventilen ermöglicht, die Bremskraft in Abhängigkeit des Ladezustandes oder von Geschwindigkeitsbedingungen einzustellen. Mittels eines Paares von Hähnen können dem System unterschiedliche Bedingungen des Ladezustandes eingegeben werden, wie zum Beispiel die Bedingungen, daß das Fahrzeug mit Personen "beladen" ist oder in einem anderen Fall mit Frachtgut.

Auch dieses Ventil umfaßt eine mehrteilige Kolbenstange, welche durch Anstoßen in eine Richtung den Lieferpfad eines benachbart angeordneten Ventiles öffnet, was wiederum dazu führt, daß über ein zwischengeschaltetes Ventil die Leitung zwischen einem Befüllungsbehälter und den Bremszylindem zum Füllen der Bremszylinder freigegeben wird. Beim Bewegen der Kolbenstange in die entgegengesetzte Richtung wird der Lieferpfad geschlossen und dafür ein Auslaßpfad geöffnet, und wiederum wird über Hilfsventile die leitende Verbindung zu den Bremszylindern freigeschaltet, diesmal in Richtung eines Umgebungsauslasses.

Um die gebohrte Kolbenstange herum ist eine Hülse angeordnet, die einen Kolben trägt, wobei die Hülse in einem gewissen Ausmaß auf der Kolbenstange in axialer Richtung beweglich ist. Mittels der Druckbeaufschlagung dieses letztgenannten Kolbens wird eingestellt, in welchem Beladungszustand sich das Fahrzeug befindet, was wiederum den im Bremszylinder erzeugten Druck beeinflußt.

Der Oberbegriff des Anspruches 1 umfaßt die gemeinsamen Merkmale der vorliegenden Erfindung und der US-A-4 163 587.

Aufgabe der Erfindung ist es somit, ein Relaisventil für Druckluftbremssysteme von Schienenfahrzeugen anzugeben, mit dem die zuvor beschriebenen Nachteile überwunden werden können.

Diese Aufgabe wird gelöst durch den Relaisventil gemäß Anspruch 1.

In einer vorteilhaften Ausführung des Relaisventiles ist vorgesehen, verzweigte Bohrungen zur Verbindung des dritten und des vierten Raumes mit dem Druckluftanschluß für den Steuerdruck beziehungsweise der Umgebung gemeinsam in einem Gehäuse vorzusehen und je nach erforderlicher Variante den Bohrungszweig vom dritten beziehungsweise vierten Raum zum Druckluftanschluß und vom vierten beziehungsweise dritten Raum zur Umgebung verschlossen zu halten.

Auf diese Weise wird bei ansonsten baugleicher Ausführung erreicht, das die auf den zweiten und den dritten Kolben wirkenden resultierenden Kräfte in Betrag und Richtung geändert werden können, so daß sich die Varianten dadurch unterscheiden, daß die eine für die Erzeugung höherer Ausgangsdrücke (z.B. für Lokomotiven), die andere für niedrigere Ausgangsdrücke (z.B. für Wagen) geeignet ist.

Eine alternative Ausgestaltung der Erfindung sieht vor, das anstelle eines Druckluftanschlusses für den Steuerdruck zwei Anschlüsse für zwei Steuerdrükke vorhanden sind, wobei der erste Anschluß mindestens mit dem zweiten Raum und der zweite mit dem dritten oder vierten Raum verbunden ist. Dadurch kann das Relaisventil durch zwei voneinander unabhängige Vorsteuerungssysteme vorgesteuert werden, zum Beispiel durch ein Druckluftsteuerungssystem und ein System der elektronischen Signalverarbeitung mit einem elektropneumatisch erzeugten Ausgangsdruck, welcher als der zweite Steuerdruck verwendet wird.

Die Erfindung soll nachfolgend anhand der Zeichnung beispielhaft beschrieben werden.

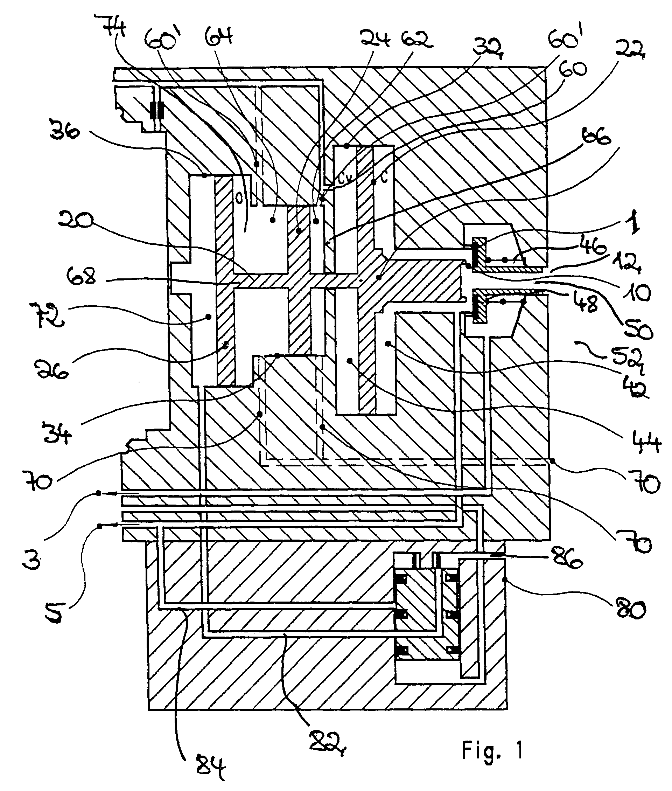

Figur 1 zeigt schematisch den Schnitt durch ein erfindungsgemäßes Relaisventil.

Das in Figur 1 dargestellte Relaisventil umfaßt ein Einlaßventil 1 für den Einlaß von Druckluft aus einem Reservoir 3 in einen Wirkungsraum 5 sowie ein Auslaßventil 10 für den Auslaß von Druckluft aus dem Wirkungsraum 5 in die Umgebung 12 sowie ein Kolbensystem 20, mit einer Kolbenstange 68 und drei Kolben, nämlich einem ersten Kolben 22, einem zweiten Kolben 24 sowie einem dritten Kolben 26.

Die Kolben bewegen sich mittels gleitender oder Membrandichtungen dicht in ihnen jeweils zugeordneten Zylindern. So bewegt sich der erste Kolben 22 in einem ersten Zylinder 32, der zweite Kolben 24 in einem zweiten Zylinder 34 und der dritte Kolben 26 in einem dritten Zylinder 36. Durch den dichtenden Abschluß des Kolbens in den jeweiligen Zylinderräumen werden auf beiden Seiten des jeweiligen Kolbens Räume 42, 44, 62, 64, 72 ausgebildet.

Die Funktionsweise des Relaisventils ist wie folgt:

Wird in das Relaisventil über die Bohrung 60 ein Steuerdruck eingespeist, so erzeugt dieser an den Kolben Kräfte, welche durch die erfindungsgemäße Verbindung der Räume untereinander und mit den Druckluftanschlüssen eine bestimmte Resultierende bilden. Durch diese wird das Kolbensystem 20 in Richtung des Einlaßventils 1 bewegt und dieses geöffnet. Dadurch strömt Druckluft aus dem Reservoir 3 in den Wirkungsraum 5. Mit zunehmendem Druck im Wirkungsraum steigt auch der Druck auf den Kolben 22 aus dem ersten Raum 42 an, bis am Kolben 22 ein Kräftegleichgewicht herrscht und das Kolbensystem 20 in eine Abschlußstellung zurückkehrt, in der sowohl das Einlaßventil 1 als auch das Auslaßventil 10 geschlossen sind.

Bei Verminderung des Steuerdrucks bewegt sich das Kolbensystem 20 nach links, worauf sich das Auslaßventil 10 öffnet und der Druck im Wirkungsraum 5 durch Entlüftung über eine Entlüftungsbohrung 50 vermindert wird, bis wiederum das Kräftegleichgewicht am Kolbensystem 20 erreicht ist, welches zur Abschlußstellung führt.

Da das Kräftegleichgewicht für den sich einstellenden Druck in Wirkungsraum 5 verantwortlich ist, gilt bei folgenden Bezeichnungen:

C       Druck im Wirkungsraum 5
Cv     Steuerdruck
Fc      Resultierende der Kräfte, die durch Belastung von Kolbenflächen mit dem Druck C entstehen
Fcv    Resultierende der Kräfte, die durch Belastung von Kolbenflächen mit dem Druck Cv entstehen.

$$C \,/\, Cv = Fcv \,/\, {-}\, Fc \;(Fcv > 0,\, Fc < 0)$$

das heißt, das Verhältnis des Druckes im Wirkungsraum 5 zu seinem Steuerdruck läßt sich dadurch wie gewünscht beeinflussen, daß die den Drücken zugeordneten Kolbenflächen entsprechend gewählt werden. Hierbei ist zu unterscheiden zwischen einer Auswahl der Drücke, die durch die in das Gerät eingebauten Kolbengrößen festgelegt ist und der Möglichkeit, zwischen verschiedenen Drücken bei einem Gerät mit bestimmten Kolbengrößen umzuschalten.

Zunächst soll die Wirkung der in das Gerät eingebauten Kolbengrößen weiter beschrieben werden.

Der Steuerdruck gelangt über die verzweigte Bohrung 60 zum ersten Kolben 22 und gleichzeitig zum zweiten Kolben 24, welcher einen anderen Durchmesser als der erste Kolben 22 hat. Die vorliegende Beschreibung soll dabei sowohl die Möglichkeit umfassen, diesen Kolben von links aus dem vierten Raum 64 als auch von rechts aus dem dritten Raum 62 zu belasten, wobei der jeweils gegenüberliegende Raum über die Bohrung 70 entlüftet ist. Diese Auswahl wird durch Öffnung beziehungsweise Verschluß der mit den Räumen 62 und 64 verbundenen Zweige der Bohrungen 60 und 70 erreicht, wobei ansonsten baugleiche Typenvertreter einer Gerätefamilie entstehen.

Der sich durch diese Ausführung einstellende Druck C im Wirkungsraum 5 ergibt sich durch Anwendung der oben stehenden Formel. Für die Bildung der Kräftesummen werden dabei Kräfte unter Beachtung ihres Vorzeichens verwendet, wobei man zum Beispiel von links wirkende Kräfte als positiv, von rechts wirkende als negativ bestimmt.

Dies soll an Beispielen mit folgenden Bezeichnungen erläutert werden:

     A22 Kolbenfläche des Kolbens 22

A24 Kolbenfläche des Kolbens 24
A26 Kolbenfläche des Kolbens 26

Bei Wirkung des Steuerdruckes im dritten Raum 62 zusätzlich zum zweiten Raum 44 gilt dann: $Fcv = Cv * A22 - Cv * A24$ (Fcv > 0).

Bei Wirkung des Steuerdruckes im vierten Raum 64 zusätzlich zum zweiten Raum 44 gilt: $Fcv = Cv * A22 + Cv * A24 - Cv * A26$ (Fcv > 0).

Für Fc gilt: $Fc = -C * A22$ (Fc < 0).

An dieser Stelle ist erkennbar, daß sich durch Auswahl der Kolbengrößen und ihrer Belastungsrichtung durch den Steuerdruck beliebige Druckverhältnisse größer oder kleiner als 1 bilden lassen. Insbesondere lassen sich auch Druckverhältnisse bilden, die relativ nahe an 1 liegen, weil nämlich durch die Wirkung des Steuerdrucks von rechts und von links kleine resultierende Kolbenkräfte entstehen können, ohne daß dazu unpraktikabel kleine Kolben verwendet werden müssen.

Somit ist der entstehende Druck im Wirkungsraum durch die Ausführung des Gerätes vorbestimmt. Wie bei einem vorbestimmten Gerät der Druck im Wirkungsraum auf eine andere Größe umgeschaltet werden kann, wird im folgenden ebenfalls anhand von Figur 1 beschrieben.

Der Vorgang läuft zunächst wie oben stehend beschrieben ab. Der fünfte Raum 72 ist dabei über eine Bohrung 82 mit einer Entlüftungsbohrung 86 verbunden, so daß dieser Raum drucklos ist. Dabei ergibt sich, wie bereits erläutert, eine Kraft $Fc = -C * A22$ (Fc<0).

Die Verbindung der Bohrung 82 mit dem Entlüftungsanschluß 86 erfolgt dabei beispielsweise über den Kolben 87 eines Wegeventils, der durch einen über die Bohrung 88 zugeführten Schaltdruck in der dargestellten Position gehalten wird. Durch Entlüftung des Schaltdruckes wird sich der Kolben 87 in die untere Position bewegen und den fünften Raum über die Bohrungen 82 und 84 mit dem Wirkungsraum 5 verbinden, so daß der Druck C jetzt, zusätzlich zum ersten Raum auch im fünften Raum wirkt. Dadurch ergibt sich für die Kraft Fc:

$$Fc = C * A26 - C * A22 \text{ (Fc < 0).}$$

Das sich hierdurch einstellende Druckverhältnis C / Cv wird entsprechend der bereits erläuterten Formel C / Cv = Fcv / -Fc ist ein größeres, als es zunächst bei entlüftetem fünftem Raum bestand. Die Be- und Entlüftung des fünften Raumes kann, außer durch das hier beispielhaft beschriebene pneumatisch gesteuerte Wegeventil, auch durch andere, als einzelne Elemente bekannte Mittel, zum Beispiel durch ein Magnetventil, erfolgen.

Abgeleitet von der oben stehend beschriebenen Grundvariante des erfindungsgemäßen Relaisventiles kann eine Variante dadurch gebildet werden, das wahlweise einzelne Zweige der Bohrungen 60 und 70 oder die Bohrung 82 nicht mit dem genannten Steuerdruck, sondern mit einem zweiten Anschluß für den Steuerdruck für einen zweiten Steuerdruck Cv2 verbunden werden. Bei prinzipiell gleicher Wirkungsweise ergibt sich hierdurch die Möglichkeit, den Druck C im Wirkungsraum in Abhängigkeit von zwei Steuerdrücken zu bilden, was durch die Gleichung $C = (Cv * Acv + Cv2 * Acv2) / Ac$ beschrieben wird, wobei Ac, Acv und Acv2 jeweils die Summen der durch die Drücke C, Cv und Cv2 belasteten Kolbenflächen sind, die unter Beachtung ihrer Orientierung mit Vorzeichen addiert werden.

Diese Variante ist vorteilhaft insbesondere dann anzuwenden, wenn das Relaisventil durch zwei voneinander unabhängige Vorsteuerungssysteme vorgesteuert werden soll, zum Beispiel durch ein Druckluftsteuerungssystem und ein System der elektronischen Signalverarbeitung mit einem elektropneumatisch erzeugten Ausgangsdruck, welcher als der zweite Steuerdruck verwendet wird.

Bezugszeichenliste:

1:      Einlaßventil
3:      Reservoir
5:      Wirkungsraum
10:      Auslaßventil
12:      Umgebung
20:      Kolbensystem
22:      erster Kolben
24:      zweiter Kolben
26:      dritter Kolben
32:      erster Zylinder
34:      zweiter Zylinder
36:      dritter Zylinder
42:      erster Raum
44:      zweiter Raum
46:      Druckfeder
50:      Auslaß
60:      Bohrung
62:      dritter Raum
64:      vierter Raum
68:      Kolbenstange
70:      Bohrung
72:      fünfter Raum
80:      2/3-Wegeventil
82:      Bohrung
84:      Bohrung
86:      Bohrung
87:      Kolben

**Patentansprüche**

1. Relaisventil für Druckluftbremssysteme von Schienenfahrzeugen mit

1.1 einem Einlaßventil (1) für den Einlaß von Druckluft aus einem Reservoir (3) in einen Wirkungsraum (5) und

1.2 einem Auslaßventil (10) für den Auslaß von Druckluft aus dem Wirkungsraum (5) in die Umgebung (52) und

1.3 einem Kolbensystem (20), das mit dem Ein- und dem Auslaßventil derart verbunden ist, daß es bei einer Bewegung in eine erste Richtung das Einlaßventil (1) und bei Bewegung in die entgegengesetzte Richtung das Auslaßventil (10) öffnet, **dadurch gekennzeichnet, daß** das Kolbensystem (20) auf einer Kolbenstange (68) umfasst:

1.4 einen ersten Kolben (22), der in einem ersten Zylinder (32) angeordnet ist, so daß der Zylinder in zwei Räume (42, 44) unterteilt wird, wobei der auf der einen Seite des Kolbens gelegene erste Raum (42) einen ersten Anschluß aufweist, der mit dem Wirkungsraum (5) verbunden ist; sowie der zweite Druckraum (44) einen zweiten Anschluß (60) für einen Steuerdruck;

1.5 einen zweiten Kolben (24), der in einem zweiten Zylinder (34) angeordnet ist, so daß der zweite Zylinder (34) in zwei Räume (62, 64) unterteilt wird; wobei der dritte Raum und der auf der anderen Seite des Kolbens gelegene vierte Raum jeweils mit Bohrungen verbunden sind, von denen eine mit dem Druckluftanschluß für den Steuerdruck und die andere mit der Umgebung verbunden ist, und sich der dritte Kolben in einem dritten Zylinder befindet, dessen auf der einen Seite des Kolbens gelegener fünfter Raum mit einem Wegeventil verbunden ist, das den fünften Raum in einer Stellung mit einem variablen Druck, zum Beispiel dem Ausgangsdruck und in einer anderen Stellung mit einem Entlüftungsanschluß verbindet und dessen auf der anderen Seite des Kolbens gelegener Raum der vierte Raum ist.

**2.** Relaisventil gemäß Anspruch 1, **dadurch gekennzeichnet, daß** verzweigte Bohrungen zur Verbindung des dritten und des vierten Raumes mit dem Druckluftanschluß für den Steuerdruck beziehungsweise der Umgebung vorgesehen sind.

**3.** Relaisventil nach Anspruch 2, **dadurch gekennzeichnet, daß** der Bohrungszweig vom dritten beziehungsweise vierten Raum am Druckluftanschluß verschlossen ist.

**4.** Relaisventil nach Anspruch 2, **dadurch gekennzeichnet, daß** der Bohrungszweig vom vierten beziehungsweise dritten Raum zur Umgebung verschlossen wird.

**5.** Relaisventil nach Anspruch 1, **dadurch gekennzeichnet, daß** anstelle eines Druckluftanschlusses für den Steuerdruck zwei Anschlüsse für zwei Steuerdrücke vorhanden sind, wobei der erste Anschluß mindestens mit dem zweiten Raum und der zweite mit dem dritten oder vierten Raum verbunden ist.

**Claims**

**1.** Relay valve for compressed-air brake systems in railway vehicles, comprising

1.1 an intake valve (1) for the intake of compressed air from a reservoir (3) into an operating space (5) and

1.2 a discharge valve (10) for the discharge of compressed air from said operating space (5) into the environment (52), and

1.3 a piston system (20) connected to said intake and discharge valves in such a way that in the event of a movement into a first position, said intake valve (1) opens, and in the event of a movement into the opposite direction, said discharge valve (10) opens,

**characterised in that** said piston system (20) on a piston rod (68) comprises:

1.4 a first piston (22) that is disposed in a first cylinder (32) such that said cylinder is subdivided into two spaces (42, 44), with the first space (42), which is located on one side of said piston, presents a first port that is connected to said operating space (5) whilst said second pressurized space (44) presents a second port (60) for a pilot pressure;

1.5 a second piston (24) that is disposed in a second cylinder (34) such that said second cylinder (34) is subdivided into two spaces (62, 64), with said third space and said fourth space, which is located on the other side of said piston, are each connected to bores whereof one is connected to said compressed-air port for the pilot pressure whilst the other one is connected to the environment, and whereof said third piston is located in a third cylinder whose fifth space, which is located on one side of said piston is connected to a multi-way valve that connects, in one position, said fifth space to a variable pressure such as the output pressure, and, in another position, to a venting port, and whose space located on the other side of the piston is said fourth space.

**2.** Relay valve according to Claim 1, **characterised in that**
branched bores are provided for connecting said third space and said fourth space to said compressed-air port for the pilot pressure or the environment, respectively.

**3.** Relay valve according to Claim 2, **characterised in that**
the bore branch from said third or said fourth space, respectively, at said compressed-air port is closed.

**4.** Relay valve according to Claim 2, **characterised in that**
the bore branch from said fourth or said third space, respectively, to the environment is closed.

**5.** Relay valve according to Claim 1, **characterised in that**
instead of a compressed-air port for the pilot pressure, two ports are provided for two pilot pressures, with the first port being connected at least to said second space and with the second port being connected to said third or fourth space.

**Revendications**

**1.** Valve relais pour systèmes de freinage à air comprimé de véhicules sur rails, comprenant

1.1 une valve d'admission (1) à admettre de l'air comprimé d'un réservoir (3) dans un espace de service (5) et
1.2 une valve d'échappement (10) pour l'échappement de l'air comprimé en dehors dudit espace de service (5) vers l'environnement (52), et
1.3 un système à pistons (20) raccordé auxdites valves d'admission et d'échappement d'une façon, qu'au cas d'un mouvement en une première position, ladite valve d'admission (1) s'ouvre, et au cas d'un mouvement en un sens opposé, ladite valve d'échappement (10) s'ouvre,

**caractérisée en ce que** ledit système à pistons (20) sur une tige de piston (68) comprend:

1.4 un premier piston (22), qui est disposé dans un premier cylindre (32) d'une manière, que ledit cylindre soit divisé en deux espaces (42, 44), dont le premier espace (42), qui se trouve d'un côté dudit piston, présente un premier raccord, qui est relié audit espace de service (5), pendant que le deuxième espace sous pression (44) présente un deuxième raccord (60) pour la pression de commande;

1.5 un deuxième piston (24), qui est disposé dans un deuxième cylindre (34) de façon, que ledit deuxième cylindre (34) soit divisé en deux espaces (62, 64), audit troisième espace et audit quatrième espace, qui se trouve de l'autre côté dudit piston, sont reliés respectivement aux alésages, dont un est raccordé audit raccord de l'air comprimé pour la pression de commande, pendant que l'autre est relié à l'environnement, et dont ledit troisième piston est disposé dans un troisième cylindre, dont le cinquième espace, qui se trouve d'un côté dudit piston est raccordé à une vanne à plusieurs voies, qui, en une position, relie ledit cinquième espace à une pression variable, par exemple la pression d'échappement, et, en une autre position, à un raccord d'aération, et dont l'espace formé de l'autre côté du piston constitue ledit quatrième espace.

**2.** Valve relais selon la revendication 1, **caractérisée en ce que**
des alésages branchés sont formés pour le raccord dudit troisième espace et dudit quatrième espace audit raccord de l'air comprimé pour la pression de commande ou respectivement à l'environnement.

**3.** Valve relais selon la revendication 2, **caractérisée en ce que**
la branche de l'alésage, qui s'étend à partir dudit troisième espace ou respectivement dudit quatrième espace vers ledit raccord de l'air comprimé, est fermée.

**4.** Valve relais selon la revendication 2, **caractérisée en ce que**
la branche de l'alésage, qui s'étend à partir dudit quatrième espace ou respectivement dudit troisième espace vers l'environnement, est fermée.

**5.** Valve relais selon la revendication 1, **caractérisée en ce que**
deux raccords sont formés, au lieu d'un seul raccord d'air comprimé pour la pression de commande, pour deux niveaux de pression de commande, dont le premier raccord est relié au moins audit deuxième espace et dont le deuxième raccord est relié audit troisième ou quatrième espace.

Fig. 1